# EUROPEAN PATENT APPLICATION

(11) **EP 2 385 227 A1**
(43) Date of publication of application: **09.11.2011**
(21) Application number: 10735836.8
(22) Date of filing: 27.01.2010
(51) Int. Cl.: F01N 3/08, B01D 53/86, B01D 53/94

(54) **EXHAUST GAS PURIFYING APPARATUS**

(30) Priority: 30.01.2009 JP 2009020323
(71) Applicant: Mitsubishi Heavy Industries, Ltd., Tokyo 108-8215 (JP)
(72) Inventor: UJIHARA, Yuuko, Kanagawa-ken 236-8515 (JP); TANOURA, Masazumi, Kanagawa-ken 236-8515 (JP); MUTA, Kenji, Kanagawa-ken 236-8515 (JP); DANNO, Minoru, Kanagawa-ken 236-8515 (JP); KATSUKI, Masatoshi, Kanagawa-ken 236-8515 (JP); UENO, Daishi, Minato-ku, Tokyo 108-8215 (JP); FUJINAGA, Takashi, Hyogo-ken 652-8585 (JP); KATO, Eiji, Hyogo-ken 652-8585 (JP); ASAMI, Shinichiro, Hyogo-ken 652-8585 (JP); AOKI, Tadashi, Hyogo-ken 652-8585 (JP)
(74) Representative: Intès, Didier Gérard André
(86) International application number: PCT/JP2010/051046
(87) International publication number: WO 2010/087370

(57) **Abstract**

A flue gas purifying device includes an exhaust pipe that guides flue gas discharged from an internal combustion engine; a catalytic unit that is arranged on a downstream side to the internal combustion engine in a flow direction of flue gas and includes a nitrogen-oxide storage-reduction catalyst that stores nitrogen oxides contained in flue gas and a support mechanism that is arranged in the exhaust pipe and supports the nitrogen-oxide storage-reduction catalyst in the exhaust pipe; a reducing-agent injecting unit that injects a reducing agent to the catalytic unit in the exhaust pipe; a concentration measuring unit that is arranged on a downstream side to the catalytic unit in the flow direction of flue gas and measures a concentration of nitrogen oxides in flue gas having passed through the nitrogen-oxide storage-reduction catalyst; and a control unit that controls whether to inject the reducing agent from the reducing-agent injecting unit based on a concentration of nitrogen oxides measured by the concentration measuring unit.

## Description

### Field

The present invention relates to a flue gas purifying device that reduces nitrogen oxides discharged from an internal combustion engine.

### Background

Gas discharged from an internal combustion engine such as a diesel engine, a gasoline engine, and a gas turbine, that is flue gas, contains nitrogen oxides (NOx) and particulate matters (PM). Particularly, because the diesel engine burns fuel in an oxygen excessive state, a large amount of nitrogen oxides (NOx) and particulate matters (PM) are contained in flue gas. Therefore, a device that decreases particulate matters or a device that decreases nitrogen oxides is provided in an exhaust pipe of an internal combustion engine. As an example of the device that decreases nitrogen oxides, there is a device that decreases nitrogen oxides from flue gas by injecting urea into an exhaust pipe that guides flue gas, produces ammonia from urea in the exhaust pipe, causes the produced ammonia to react with nitrogen oxides in flue gas, and then deoxidize nitrogen oxides to produce nitrogen again.

For example, Patent Literature 1 describes a flue gas purifying device in which a DPF device and a selective catalytic reduction catalytic device are sequentially arranged from an upstream side in an exhaust path of an internal combustion engine. Patent Literature 1 also describes a device that calculates NOx emissions, at the time of a normal operation, based on a NOx emissions map for the normal operation, or at the time of forced regeneration of the DPF device, calculates NOx emissions based on a NOx emissions map for the forced regeneration, to calculate a feed rate of ammonia aqueous solution corresponding to the calculated NOx emissions, and feeds ammonia aqueous solution into flue gas on an upstream side of the selective catalytic reduction catalytic device so as to reach the calculated feed rate.

Further, Patent Literature 2 describes NOx removal equipment for flue gas discharged from a combustion plant such as a waste incinerator, although it is not for treatment of flue gas from an internal combustion engine. Patent Literature 2 describes a denitration control method in which a NOx concentration in gas before treatment, an ammonia concentration in treated flue gas, a NOx concentration in flue gas, and a flow rate of flue gas are measured, to calculate a flow rate of NOx before treatment, a NOx concentration after treatment, a record of NOx removal efficiency by NOx removal equipment, and an ammonia concentration in treated flue gas based on a measurement result thereof, deviations between the calculated values and target values thereof are respectively calculated to thereby calculate correction values based on the calculated deviations, and a corrected flow rate of NOx is calculated based on at least one of the calculated correction values, thereby controlling a flow rate of ammonia to be injected into flue gas before treatment based on the calculated corrected flow rate of NOx.

Furthermore, as an apparatus for decreasing nitrogen oxides, there is an apparatus that stores nitrogen oxides in a nitrogen-oxide storage-reduction catalyst, produces carbon monoxide or hydrogen by injecting light gas oil in a tube or a pipe with a predetermined interval and by partially oxidizing the light gas oil, and reduces the nitrogen oxides stored in a storage catalyst by the produced carbon monoxide or oxygen.

### Citation List

### Patent Literatures

Patent Literature 1: Japanese Patent Application Laid-open No. 2007-154849
Patent Literature 2: Japanese Patent Application Laid-open No. 2005-169331

### Summary

### Technical Problem

In a flue gas purifying device that uses a nitrogen-oxide storage-reduction catalyst (hereinafter, referred as "NOx storage catalyst"), there is a limit to the nitrogen oxide storage capacity of a NOx storage catalyst. Therefore, as described above, reduction treatment needs to be performed with a predetermined interval. The timing of performing the reduction treatment is calculated based on a data map showing a correlation of engine speed and torque with the temperature of flue gas and the concentration of nitrogen oxides in flue gas. By calculating a discharge amount of nitrogen oxides based on the data map, the reduction treatment can be performed before a threshold limit of the storage capacity of the NOx storage catalyst is reached.

However, in the NOx storage catalyst, the storable amount of nitrogen oxides varies according to the temperature of the catalyst. Therefore, at the time of an unsteady operation, it is difficult to ascertain the amount that can be stored by the catalyst accurately. Further, because the NOx storage catalyst deteriorates due to being used, the amount that can be stored by the catalyst is not constant at all times. Therefore, even if the timing of the reduction treatment is controlled based on a data map, appropriate control cannot be performed at the time of an unsteady operation, or when a rapid temperature change or deterioration of the catalyst occurs.

If a reducing agent (for example, light gas oil) is excessively input at the time of performing the reduction treatment of the NOx storage catalyst, reduction proceeds too much to produce ammonia. Accordingly, if the reduction treatment is performed in a state that NOx is not stored in the NOx storage catalyst, ammonia is produced. Therefore, performing the reduction treatment of the NOx storage catalyst more than necessary without accurately ascertaining the storage capacity of the NOx storage catalyst is problematic.

The present invention has been achieved to solve the above problem, and an object of the present invention is to provide a flue gas purifying device that can appropriately perform reduction treatment of a storage catalyst, to suppress leakage of nitrogen oxides and ammonia to a downstream side, and to decrease nitrogen oxides in flue gas efficiently.

### Solution to Problem

According to an aspect of the present invention, a flue gas purifying device that reduces nitrogen oxides contained in flue gas discharged from an internal combustion engine, the device including an exhaust pipe that guides flue gas discharged from the internal combustion engine, a catalytic unit that is arranged on a downstream side to the internal combustion engine in a flow direction of the flue gas and includes a nitrogen-oxide storage-reduction catalyst that stores nitrogen oxides contained in the flue gas and a support mechanism that is arranged in the exhaust pipe and supports the nitrogen-oxide storage-reduction catalyst in the exhaust pipe, a reducing-agent injecting unit that injects a reducing agent to the catalytic unit in the exhaust pipe, a concentration measuring unit that is arranged on a downstream side to the catalytic unit in a flow direction of the flue gas and that measures a concentration of nitrogen oxides in the flue gas having passed through the nitrogen-oxide storage-reduction catalyst, and a control unit that controls whether to inject the reducing agent from the reducing-agent injecting unit based on a concentration of nitrogen oxides measured by the concentration measuring unit.

As described above, by measuring the concentration of nitrogen oxides by the concentration measuring unit and controlling injection of the reducing agent based on a measurement result, the timing of performing reduction treatment can be appropriately detected. Accordingly, production of ammonia can be suppressed by the flue gas purifying device, and nitrogen oxides in flue gas can be also decreased. The number of times of the reduction treatment can be also decreased.

Advantageously, in the flue gas purifying device, the concentration measuring unit continuously measures a concentration of nitrogen monoxide as the concentration of nitrogen oxides. As described above, by continuously measuring nitrogen monoxide, the timing of performing the reduction treatment can be detected more appropriately.

Advantageously, the flue gas purifying device further includes a temperature detecting unit that detects a temperature of the nitrogen-oxide storage-reduction catalyst, the control unit stores temperature history data thereof detected by the temperature detecting unit, calculates an amount of fuel to be injected from the reducing-agent injecting unit based on the temperature history data and the concentration of nitrogen oxides, and causes the reducing-agent injecting unit to inject a calculated amount of fuel.

As described above, by acquiring a temperature history data, the timing of performing the reduction treatment and the amount of the reducing agent to be injected can be appropriately detected, thereby enabling to further decrease nitrogen oxides.

Advantageously, in the flue gas purifying device, the control unit causes the reducing-agent injecting unit to inject the reducing agent when the concentration of nitrogen oxides measured by the concentration measuring unit exceeds a standard value. By providing a specified value in this manner, a reduction operation can be appropriately performed.

Advantageously, the flue gas purifying device further includes an ammonia-concentration measuring unit that is arranged on a downstream side to the catalytic unit in a flow direction of the flue gas and measures an ammonia concentration in the flue gas having passed through the nitrogen-oxide storage-reduction catalyst, and the control unit controls an amount of a reducing agent to be injected based on the ammonia concentration measured by the ammonia-concentration measuring unit. In this manner, also by measuring the ammonia concentration, the amount of the reducing agent to be injected can be appropriately calculated.

Advantageously, in the flue gas purifying device, the control unit calculates time degradation of a storage capacity of the nitrogen-oxide storage-reduction catalyst based on the detected concentration of nitrogen oxides and the detected ammonia concentration and controls an injection timing and an injection amount of a reducing agent based on a calculation result thereof.

As described above, by additionally taking the storage performance of the nitrogen-oxide storage-reduction catalyst into consideration, the injection timing and the injection amount of the reducing agent can be calculated more appropriately, thereby enabling to prevent production of ammonia and further decrease nitrogen oxides.

Advantageously, the flue gas purifying device further includes an SCR catalytic unit that is arranged on a downstream side to the catalytic unit in a flow direction of the flue gas, and includes an SCR catalyst that promotes a reaction between the nitrogen oxides and ammonia, and a support mechanism that is arranged in the exhaust pipe and supports the SCR catalyst in the exhaust pipe.

As described above, by providing the SCR catalytic unit, even if there is ammonia leakage, ammonia is reacted with nitrogen oxides, thereby enabling to decrease or to remove ammonia.

Advantageously, the flue gas purifying device further includes a post-treatment nitrogen-oxide-concentration measuring unit that is arranged on a downstream side to the SCR catalytic unit in a flow direction of the flue gas and measures a concentration of nitrogen oxides in flue gas having passed through the SCR catalyst, the control unit controls injection of a reducing agent by the reducing-agent injecting unit based on concentration of nitrogen oxides measured by the post-treatment nitrogen-oxide-concentration measuring unit.

By providing the post-treatment nitrogen-oxide-concentration measuring unit, nitrogen oxides that cannot be treated by the SCR catalytic unit can be detected, and by performing control based on the detection value, discharge of nitrogen oxides can be further suppressed.

Advantageously, the flue gas purifying device further includes a post-treatment ammonia-concentration measuring unit that is arranged on a downstream side to the SCR catalytic unit in a flow direction of the flue gas and measures an ammonia concentration in flue gas having passed through the SCR catalyst, the control unit controls injection of a reducing agent by the reducing-agent injecting unit based on an ammonia concentration measured by the post-treatment ammonia-concentration measuring unit.

By providing the post-treatment ammonia-concentration measuring unit, ammonia that cannot be treated by the SCR catalytic unit can be detected, and by performing control based on the detection value, discharge of nitrogen oxides can be further suppressed.

### Advantageous Effects of Invention

The flue gas purifying device according to the present invention can appropriately detect a timing of performing reduction treatment with respect to a nitrogen-oxide storage-reduction catalyst, prevent nitrogen oxides and ammonia from leaking to a downstream side, and efficiently decrease nitrogen oxides in flue gas.

### Brief Description of Drawings

FIG. 1 is a block diagram of a schematic configuration of a vehicle according to an embodiment of the present invention having a flue gas purifying device according to the present invention.
FIG. 2 is a block diagram of a schematic configuration of a concentration measuring unit in a flue gas purifying device for a diesel engine shown in FIG. 1.
FIG. 3 is a graph of an example of a relation between a NOx storage capacity of a NOx storage catalyst and a temperature.
FIG. 4 is a graph of an example of a relation between a NOx conversion rate of a NOx storage catalyst and a temperature.
FIG. 5 is a block diagram of a schematic configuration of a vehicle having the flue gas purifying device according to another embodiment.

### Description of Embodiments

Exemplary embodiments a flue gas purifying device according to the present invention will be explained below in detail with reference to the accompanying drawings. The present invention is not limited to the embodiments. In the following embodiments, it is assumed that an internal combustion engine mounted on the flue gas purifying device is a diesel engine, and an apparatus including the internal combustion engine is a vehicle having a diesel engine. However, the internal combustion engine is not limited thereto, and the present invention is also applicable to various internal combustion engines such as a gasoline engine and a gas turbine. Further, a device having the internal combustion engine is not limited to a vehicle, and the device can be used as an internal combustion engine of various devices such as a ship and a power generator.

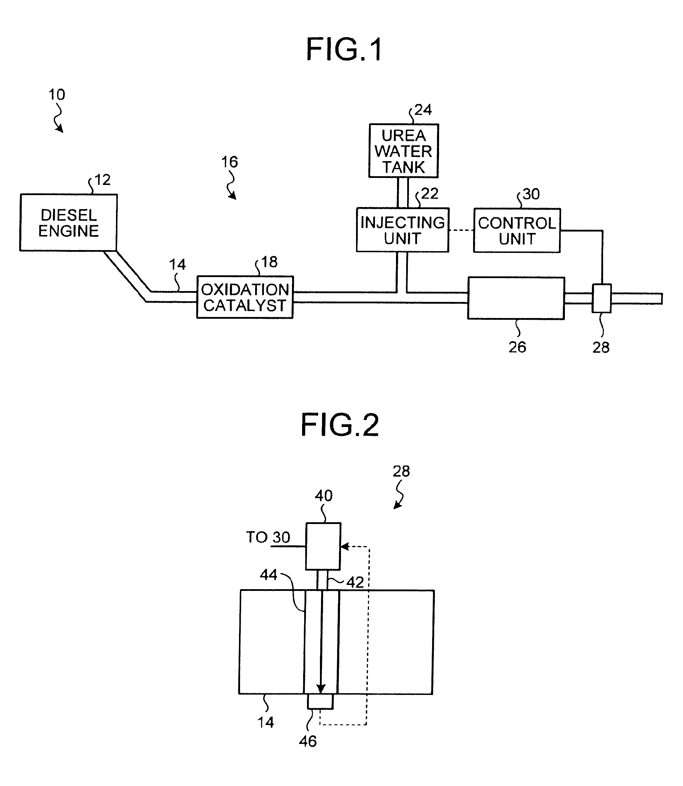

FIG. 1 is a block diagram of a schematic configuration of a vehicle according to an embodiment having a diesel engine mounted on the flue gas purifying device according to the present invention. FIG. 2 is a block diagram of a schematic configuration of a concentration measuring unit in the flue gas purifying device shown in FIG. 1. As shown in FIG. 1, a vehicle 10 includes a diesel engine 12, an exhaust pipe 14 for guiding flue gas discharged from the diesel engine 12, and a flue gas purifying device 16 that purifies flue gas flowing in the exhaust pipe 14. The vehicle 10 also includes various elements required for a vehicle, such as wheels, a body, operating parts, and a transmission, other than constituent elements shown in the drawings.

The diesel engine 12 is an internal combustion engine that uses light oil or heavy oil as a fuel, and burns the fuel to extract power. The exhaust pipe 14 is connected to the diesel engine 12 at one end thereof, to guide flue gas discharged from the diesel engine 12.

The flue gas purifying device 16 includes an oxidation catalyst 18, a fuel injecting unit 22, a fuel tank 24, a nitrogen-oxide storage-reduction catalytic unit (hereinafter, referred as "NOx storage catalytic unit") 26, a concentration measuring unit 28, and a control unit 30, and is arranged in an exhaust passage of flue gas, that is, inside the exhaust pipe 14 or adjacent to the exhaust pipe 14.

The oxidation catalyst 18 is a catalyst such as platinum provided in the exhaust passage of flue gas, specifically, inside of a downstream portion to an exhaust port of the diesel engine 12 in a flow direction of flue gas in the exhaust pipe 14. A part of components of particulate matters (PM) in flue gas having passed in the exhaust pipe 14 and through the oxidation catalyst 18 is removed by the oxidation catalyst 18. The PM here is an air contaminant discharged from the diesel engine, and is a mixture of solid carbon particles, unburned hydrocarbons (Soluble Organic Fraction: SOF) formed of macro-molecules, and sulfates generated by oxidation of sulfur contained in the fuel. The oxidation catalyst 18 oxidizes nitrogen monoxide contained in flue gas flowing in the exhaust pipe 14 to nitrogen dioxide.

The fuel injecting unit 22 is an injection apparatus that injects fuel into the exhaust pipe 14, and an injection port is provided in a portion on a downstream side to the oxidation catalyst 18 in the exhaust pipe 14. The fuel injecting unit 22 injects fuel, which serves a reducing agent, into the exhaust pipe 14 from the injection port. The fuel tank 24 stores and supplies fuel to the fuel injecting unit 22. A replenishing port for replenishing fuel from an external device that supplies fuel is provided in the fuel tank 24, and fuel is replenished according to need from the replenishing port. A fuel tank that supplies fuel only to the fuel injecting unit 22 can be provided as the fuel tank 24; however, a fuel tank that supplies fuel to the diesel engine 12 can be used. That is, the fuel tank 24 can supply fuel to the diesel engine 12 and the fuel injecting unit 22.

The NOx storage catalytic unit 26 includes a NOx storage catalyst that stores nitrogen oxides, and a support mechanism that is provided inside of a downstream portion to the fuel injecting unit 22 in the exhaust pipe 14 and that supports the NOx storage catalyst. The NOx storage catalytic unit 26 causes nitrogen oxides contained in flue gas having passed through the NOx storage catalytic unit 26 to be stored by the NOx storage catalyst. Accordingly, nitrogen oxides in flue gas are decreased or removed by passing through the NOx storage catalytic unit 26. A catalyst in which an alkaline substance as a NOx storage material is added to a conventional three-way catalyst can be used as the NOx storage catalyst, and for example, the one in which a honeycomb carrier is coated with alumina that supports platinum (Pt), rhodium (Rh), various alkalies, alkaline earths, and rare-earth oxides can be used. Further, the support mechanism is arranged inside the exhaust pipe 14, and a hole for aerating flue gas is formed therein, and the SCR catalyst is supported on the surface thereof. The support mechanism only needs to support the NOx storage catalyst in the exhaust pipe 14, and it can be a frame, for example.

The concentration measuring unit 28 is arranged in the exhaust pipe 14 on the downstream side of the NOx storage catalytic unit 26 in the exhaust passage of flue gas and measures the concentration of nitrogen oxides in flue gas having passed through the NOx storage catalytic unit 26. As shown in FIG. 2, the concentration measuring unit 28 includes a measuring unit body 40, an optical fiber 42, a measuring cell 44, and a light receiving unit 46. In the present embodiment, a case that the concentration of nitrogen monoxide in nitrogen oxides is measured by the concentration measuring unit 28 is explained.

The measuring unit body 40 has a light emitting unit that emits laser beams in a wavelength region absorbed by nitrogen monoxide, and a computing unit that calculates the nitrogen monoxide concentration from a signal. The measuring unit body 40 outputs laser beams to the optical fiber 42 and receives a signal received by the light receiving unit 46.

The optical fiber 42 guides laser beams output from the measuring unit body 40 so as to enter into the measuring cell 44.

The measuring cell 44 is arranged in a part of the exhaust pipe 14, and includes an incident unit that causes light emitted from the optical fiber 42 to enter into the measuring cell 44, and an output unit that outputs laser beams having passed through a predetermined path in the measuring cell 44.

The light receiving unit 46 receives laser beams having passed through the inside of the measuring cell 44 and output from the output unit, and outputs an intensity of received laser beams to the measuring unit body 40 as a light receiving signal.

The configuration of the concentration measuring unit 28 is as described above, and laser beams output from the measuring unit body 40 pass through the predetermined path in the measuring cell 44 from the optical fiber 42 and is output from the output unit. At this time, if nitrogen monoxide is contained in flue gas in the measuring cell 44, laser beams passing through the measuring cell 44 are absorbed. Therefore, an output of laser beams reaching the output unit changes according to the carbon monoxide concentration in flue gas. The light receiving unit 46 converts laser beams output from the output unit to a light receiving signal, and outputs the light receiving signal to the measuring unit body 40. The measuring unit body 40 compares the intensity of output laser beams with an intensity calculated from the light receiving signal, to calculate the nitrogen monoxide concentration in flue gas flowing in the measuring cell 44 based on its rate of diminution. Thus, the concentration measuring unit 28 uses TDLAS (Tunable Diode Laser Absorption Spectroscopy) to calculate or measure the nitrogen monoxide concentration in flue gas passing through a predetermined position in the measuring cell 44, that is, a measurement position based on the intensity of output laser beams and the light receiving signal detected by the light receiving unit 46. The concentration measuring unit 28 according to the present embodiment can continuously calculate or measure the nitrogen monoxide concentration.

Only the incident unit and the output unit of the measuring cell 44 can be made of a light transmitting material, or the measuring cell 44 on the whole can be made of the light transmitting material. Further, at least two optical mirrors can be provided in the measuring cell 44, so that laser beams entering from the incident unit is multiply-reflected by the optical mirrors and output from the output unit. By multiply-reflecting laser beams, laser beams can pass through more regions in the measuring cell 44. Accordingly, an influence of concentration distribution on flue gas flowing in the measuring cell 44 can be decreased, thereby enabling accurate detection of concentrations.

The control unit 30 controls the injection timing and the injection amount of fuel to be injected from the fuel injecting unit 22 according to PID control based on a detection result obtained by the concentration measuring unit 28. Specifically, when the concentration of nitrogen monoxide becomes higher than a reference value, the control unit 30 determines that more than a certain amount of NOx is stored in the NOx storage catalytic unit 26 and the NOx storage catalytic unit 26 cannot store NOx any more, and causes the fuel injecting unit 22 to inject fuel. Further, the control unit 30 controls the injection amount based on a change rate of the concentration of nitrogen monoxide and a previous operating condition. The configuration of the vehicle 10 is as described above.

When the diesel engine 12 is driven, the vehicle 10 discharges flue gas containing nitrogen oxides. The flue gas discharged from the diesel engine 12 passes through the exhaust pipe 14 and reaches the oxidation catalyst 18. In the flue gas having reached the oxidation catalyst 18, nitrogen monoxide contained in flue gas is oxidized by the oxidation catalyst 18 to become nitrogen dioxide. The flue gas oxidized by the oxidation catalyst 18 further passes through the exhaust pipe 14 and reaches the NOx storage catalytic unit 26. In the flue gas having reached the NOx storage catalytic unit 26, nitrogen oxides contained in the flue gas are stored by the NOx storage catalytic unit 26. The flue gas in which nitrogen oxides contained in the flue gas are decreased and removed by the NOx storage catalytic unit 26 further passes through the exhaust pipe 14, and is discharged outside after the concentration of nitrogen monoxide is measured by the concentration measuring unit 28. The concentration measuring unit 28 transmits a concentration measurement result of nitrogen monoxide in flue gas to the control unit 30.

In this manner, the NOx storage catalytic unit 26 continuously stores nitrogen oxides contained in flue gas passing therethrough. There is a limit to the nitrogen oxide (NOx) storage capacity of the NOx storage catalyst in the NOx storage catalytic unit 26, and when a certain amount of nitrogen oxides (exceeding the limit to the storage capacity) is stored, the NOx storage catalyst cannot store nitrogen oxides any more. Therefore, when the nitrogen oxide storage capacity of the NOx storage catalyst exceeds the limit, the concentration of nitrogen oxides in flue gas, which passes through the NOx storage catalytic unit 26 and is discharged to outside, increases.

The control unit 30 determines whether the storage capacity of the NOx storage catalyst in the NOx storage catalytic unit 26 has reached a threshold limit based on the concentration of nitrogen monoxide measured by the concentration measuring unit 28. When determining that the storage capacity has reached the threshold limit, the control unit 30 performs the reduction treatment of the NOx storage catalyst. The control unit 30 can determine whether the storage capacity has reached the threshold limit by determining whether the concentration of nitrogen monoxide exceeds the reference value. The reduction treatment is explained below. The control unit 30 injects fuel from the fuel injecting unit 22 into the exhaust pipe 14. Fuel injected into the exhaust pipe 14 is partially oxidized in the exhaust pipe 14 to produce carbon monoxide, hydrogen, and carbon hydride. Produced carbon monoxide, hydrogen, and carbon hydride react with nitrogen oxides (NO, NO₂) stored in the NOx storage catalyst. Carbon monoxide (CO) becomes carbon dioxide (CO₂), hydrogen (H₂) becomes water (H₂O), carbon hydride becomes water (H₂O) and carbon dioxide (CO₂), and nitrogen oxides become nitrogen (N₂), thereby removing nitrogen oxides from the NOx storage catalyst.

In this manner, the vehicle 10 and the flue gas purifying device 16 perform the reduction treatment of the NOx storage catalyst at the timing determined based on the concentration of nitrogen monoxide measured by the concentration measuring unit 28, for example, when the concentration of nitrogen monoxide becomes higher than the reference value, thereby enabling to remove nitrogen oxides stored by the NOx storage catalyst, so that the NOx storage catalytic unit 26 can store nitrogen oxides in flue gas again. The vehicle 10 and the flue gas purifying device 16 can optimally store nitrogen oxides contained in flue gas in the NOx storage catalyst by regularly performing the reduction treatment in this manner. That is, it can be prevented that the NOx storage catalyst cannot store nitrogen oxides contained in flue gas any more.

In the present embodiment, the timing of performing the reduction treatment is determined based on the concentration of nitrogen monoxide measured by the concentration measuring unit 28, thereby enabling to perform the reduction treatment of the NOx storage catalyst at an appropriate timing, even if the operating condition is complicated, the capacity of the NOx storage catalyst deteriorates, or the temperature rapidly changes.

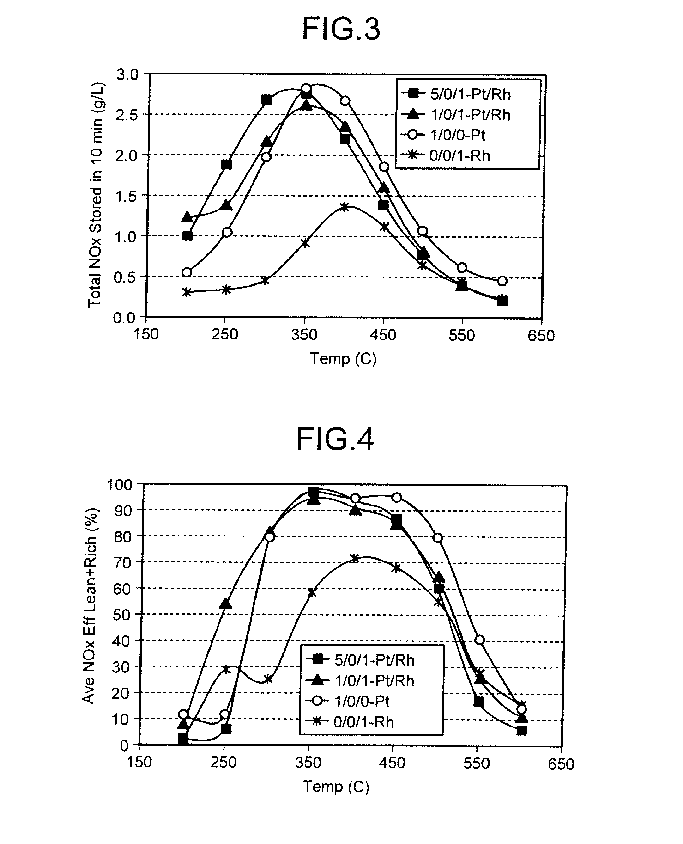

FIG. 3 is a graph of an example of a relation between the NOx storage capacity of the NOx storage catalyst and a temperature. For example, as shown in FIG. 3, the nitrogen oxide storage capacity of the NOx storage catalyst largely changes according to the temperature. However, it is difficult to accurately detect the temperature and appropriately calculate the threshold limit of the storage capacity. Therefore, when the nitrogen oxide storage capacity and the threshold limit are to be determined based on the data map calculated beforehand, it is required to set the threshold limit lower than the actual threshold limit so as not to exceed the threshold limit. That is, it is required to set the threshold limit lower than the actual threshold limit for suppressing leakage of nitrogen oxides, even if the threshold limit of the storage capacity drops due to a decrease in capacity of the NOx storage catalyst or a deviation from an appropriate temperature. Because it is difficult to accurately calculate a storage rate of NOx or a produced amount of NOx, the calculated storage capacity may be different from the actual storage capacity. When the deviation increases, fuel (as a reducing agent) may be excessively injected, so that the reduction treatment excessively proceeds to produce ammonia (NH₃). On the other hand, because the vehicle 10 and the flue gas purifying device 16 detect the reduction timing based on the result measured by the concentration measuring unit 28, the threshold limit of the storage capacity can be accurately detected, and the storage capacity of the NOx storage catalyst can be appropriately recovered, regardless of the operating condition, performance of NOx storage catalyst, and temperature environment. Because the threshold limit of the storage capacity can be accurately ascertained, even if a larger amount of fuel is injected at the time of the reduction treatment, stored nitrogen oxides can be reliably reacted with the fuel. Accordingly, a larger amount of nitrogen oxides can be reduced while suppressing production of ammonia. Therefore, the number of times of reduction treatment to be performed can be further decreased.

Because the threshold limit of the storage capacity can be accurately ascertained, the injection amount of fuel can be calculated more accurately, thereby enabling to suppress that the fuel is injected too much and reduction of nitrogen oxides excessively proceeds to produce ammonia. The timing of the reduction treatment can be controlled based on only the concentration of nitrogen oxides, and only one sensor needs to be provided, thereby enabling to simplify a device configuration.

It is desired that the flue gas purifying device performs the reduction treatment while controlling the temperature. The temperature can be controlled by using a temperature adjusting mechanism such as a heater or a cooling fan. FIG. 4 is a graph of an example of a relation between a NOx conversion ratio of the NOx storage catalyst and a temperature. As shown in FIG. 4, the NOx conversion ratio of the NOx storage catalyst changes according to the temperature. Therefore, the reduction treatment is performed while controlling the temperature, thereby enabling to reduce the NOx storage catalyst efficiently. The supplied fuel can be efficiently used by stabilizing the temperature, and unreacted substances can be decreased.

Also, the control unit 30 can calculate an approximate value of the timing of performing the reduction treatment or an approximate value of the injection amount of fuel based on the operating conditions such as accelerator opening, velocity, engine speed, and temperature. Specifically, the produced amount of nitrogen monoxide can be calculated based on the operating conditions by using the data map showing a relation between the operating conditions and an emission amount of nitrogen monoxide, to calculate the estimate of the timing of performing the reduction treatment or the estimate of the injection amount of fuel. The timing of performing the reduction treatment can be easily calculated by calculating the estimate of the timing according to the operating conditions. It can be prevented to perform the reduction treatment when the concentration of nitrogen oxides irregularly rises only for a moment. The calculation accuracy of the injection amount of fuel can be further increased by calculating the estimate of the injection amount of fuel. That is, more accurate injection amount can be calculated. Accordingly, excessive injection of fuel can be suppressed more reliably.

When the approximate value is not to be calculated, the operating conditions do not need to be detected, thereby decreasing the number of measuring units, and enabling to simplify the device configuration of the flue gas purifying device. Because the reference value does not need to be calculated according to the condition, the control can be simplified.

It is desired to provide a filter for trapping particulate matters contained in flue gas in the flue gas purifying device 16. Particulate matters (PM) contained in flue gas can be trapped by providing the filter that traps particulate matters in addition to the oxidation catalyst. It is desired to provide the oxidation catalyst as in the present embodiment, because particulate matters can be trapped, and nitrogen oxides are unified to nitrogen dioxide so as to be easily treated. However, the oxidation catalyst does not need to be provided.

In the flue gas purifying device 16, the concentration measuring unit 28 can measure nitrogen monoxide continuously without detecting nitrogen oxides. Therefore, the concentration measuring unit 28 uses the TDLAS method in which laser beams in a wavelength region absorbed by nitrogen monoxide are output and an absorption rate of laser beams is detected, to measure the concentration of nitrogen monoxide. However, the present invention is not limited thereto. Various measuring units that can measure the concentration of nitrogen monoxide in flue gas can be used in the present invention. For example, a branch pipe can be provided at a measurement position, so that a part of flue gas is caused to flow into the branch pipe to measure the concentration of nitrogen monoxide in flue gas flowing in the branch pipe. The concentration of nitrogen monoxide can be accurately measured by using the TDLAS method, without causing noise due to ammonia or the like.

Only nitrogen monoxide is detected as nitrogen oxides to be detected by the concentration measuring unit 28. However, the present invention is not limited thereto, and only nitrogen dioxide can be detected or nitrogen monoxide and nitrogen dioxide can be both detected. Even when only one of nitrogen monoxide and nitrogen dioxide is detected or nitrogen monoxide and nitrogen dioxide are both detected, the concentration of nitrogen oxides in flue gas can be suitably measured, and the timing of performing the reduction treatment can be calculated based on a measurement. When nitrogen monoxide and nitrogen dioxide are both detected according to the TDLAS method by using the concentration measuring unit 28, two sensors can be provided to perform measurement, or for example, the concentration of nitrogen monoxide and nitrogen dioxide by emitting light having two wavelength regions by one sensor can be measured with the one sensor.

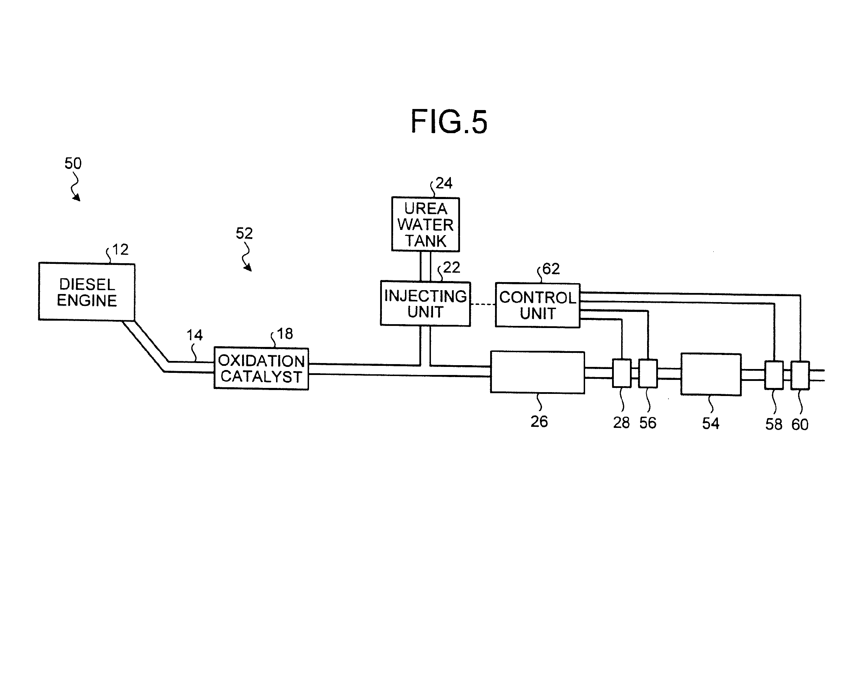

In the flue gas purifying device 16, only the concentration measuring unit 28 is provided to control the fuel injecting unit 22 based on the concentration of nitrogen oxides (nitrogen monoxide) in flue gas having passed through the NOx storage catalytic unit 26. However, the present invention is not limited thereto. A flue gas purifying device according to another embodiment of the present invention is explained below with reference to FIG. 5.

FIG. 5 is a block diagram of a schematic configuration of a vehicle according to another embodiment having the flue gas purifying device. A vehicle 50 shown in FIG. 5 has the same configuration as that of the vehicle 10, except of a part of a flue gas purifying device 52, and therefore explanations of like constituent elements will be omitted, and features specific to the vehicle 50 are mainly explained below. The vehicle 50 shown in FIG. 5 includes the diesel engine 12, the exhaust pipe 14, and the flue gas purifying device 52. The flue gas purifying device 52 includes the oxidation catalyst 18, the fuel injecting unit 22, the fuel tank 24, the NOx storage catalytic unit 26, the concentration measuring unit 28, an SCR catalytic unit 54, an ammonia-concentration measuring unit 56, a post-treatment nitrogen-oxide-concentration measuring unit 58, a post-treatment ammonia-concentration measuring unit 60, and a control unit 62. The oxidation catalyst 18, the fuel injecting unit 22, the fuel tank 24, the NOx storage catalytic unit 26, and the concentration measuring unit 28 respectively have the same configuration as those of the flue gas purifying device 16 described above, and thus detailed explanations thereof will be omitted. The concentration measuring unit 28 is arranged between the NOx storage catalytic unit 26 and the SCR catalytic unit 54.

The SCR catalytic unit 54 includes an SCR catalyst, which is a urea selective reduction catalyst, that traps ammonia and promotes a reaction of ammonia with nitrogen oxides, and a support mechanism provided inside the exhaust pipe 14 in a portion on a downstream side to the NOx storage catalytic unit 26 to support the SCR catalyst. A zeolitic catalyst can be used as the SCR catalyst. A hole arranged in the exhaust pipe 14 for aerating flue gas is formed in the support mechanism, and the SCR catalyst is supported on the surface thereof. The support mechanism can be, for example, a frame so long as it can support the SCR catalyst in the exhaust pipe 14.

The configuration of the SCR catalytic unit 54 is described above, and flue gas with nitrogen oxides being stored in the NOx storage catalytic unit 26 is supplied to the SCR catalytic unit 54 via the exhaust pipe 14. When ammonia is contained in flue gas to be supplied, the SCR catalytic unit 54 traps ammonia contained in flue gas. Ammonia is mixed in flue gas produced when the NOx storage catalytic unit 26 over-supplies fuel. When nitrogen oxides remain in flue gas supplied from the exhaust pipe 14, the SCR catalytic unit 54 causes nitrogen oxides contained in flue gas to react with trapped ammonia, so that oxygen is removed from nitrogen oxides and nitrogen oxides are reduced to nitrogen. Specifically, nitrogen oxides are reduced according to the following chemical reaction.

4NH₃+4NO+O₂ → 4N₂+6H₂O

4NH₃+2NO₂+O₂ → 3N₂+6H₂O

The ammonia-concentration measuring unit 56 is arranged in the exhaust pipe 14 on the downstream side of the NOx storage catalytic unit 26 and on an upstream side of the SCR catalytic unit 54 in the exhaust passage of flue gas and measures the concentration of ammonia in flue gas discharged from the NOx storage catalytic unit 26. The ammonia-concentration measuring unit 56 includes a measuring unit body, an optical fiber, a measuring cell, and a light receiving unit as in the concentration measuring unit 28. The measuring method of the ammonia concentration by the ammonia-concentration measuring unit 56 is the same as that of the concentration measuring unit 28, and thus explanations thereof will be omitted. The ammonia-concentration measuring unit 56 continuously measures the concentration of ammonia contained in flue gas having passed through the NOx storage catalytic unit 26 and transmits a measurement result to the control unit 62.

The post-treatment nitrogen-oxide-concentration measuring unit 58 is arranged in the exhaust pipe 14 on the downstream side of the SCR catalytic unit 54 in the exhaust passage of flue gas and measures the concentration of nitrogen oxides in flue gas having passed through the SCR catalytic unit 54. A sensor having the same configuration as that of the concentration measuring unit 28 can be used as the post-treatment nitrogen-oxide-concentration measuring unit 58. The post-treatment nitrogen-oxide-concentration measuring unit 58 continuously measures the concentration of nitrogen oxides contained in flue gas having passed through the SCR catalytic unit 54 and transmits a measurement result to the control unit 62.

The post-treatment ammonia-concentration measuring unit 60 is arranged in the exhaust pipe 14 on the downstream side of the SCR catalytic unit 54 in the exhaust passage of flue gas and measures the ammonia concentration in flue gas having passed through the SCR catalytic unit 54. A sensor having the same configuration as that of the ammonia-concentration measuring unit 56 can be used as the post-treatment ammonia-concentration measuring unit 60. The post-treatment ammonia-concentration measuring unit 60 continuously measures the concentration of ammonia contained in flue gas having passed through the SCR catalytic unit 54 and transmits a measurement result to the control unit 62.

The control unit 62 controls an injection timing of fuel by the fuel injecting unit 22, that is, a timing of the reduction treatment and an amount of fuel to be injected based on the measurement results transmitted from the concentration measuring unit 28, the ammonia-concentration measuring unit 56, the post-treatment nitrogen-oxide-concentration measuring unit 58, and the post-treatment ammonia-concentration measuring unit 60. The configurations of the vehicle 50 and the flue gas purifying device 52 are basically as described above.

The control unit 62 basically calculates the timing of the reduction treatment and the amount of fuel to be injected based on a measurement of the concentration measuring unit 28. When the amount of fuel to be injected to nitrogen oxides stored by the NOx storage catalyst increases, ammonia is produced. However, the production of ammonia can be detected by measuring the concentration of ammonia contained in flue gas by the ammonia-concentration measuring unit 56. When ammonia is measured, the control unit 62 determines that the injection amount of fuel is excessive, and decreases the injection amount of fuel. In this way, by measuring the ammonia concentration by the ammonia-concentration measuring unit 56, a decrease of the storage capacity due to a decrease of capacity of the NOx storage catalytic unit 26 can be detected, thereby enabling to control the injection amount of fuel accurately, and suppress discharge of ammonia due to oversupply of fuel.

Further, by providing the SCR catalytic unit 54, the SCR catalytic unit 54 can trap ammonia even when ammonia is produced due to the NOx storage catalytic unit 26, thereby enabling to suppress discharge of ammonia to outside of the flue gas purifying device.

It is desired that the control unit 62 calculates a performance shift of the NOx storage catalyst in the NOx storage catalytic unit 26 based on the measurement results obtained by the concentration measuring unit 28 and the ammonia-concentration measuring unit 56. That is, the control unit 62 calculates the amount of stored nitrogen oxides based on the timing of performing the reduction treatment, the amount of ammonia to be discharged at the time of reduction and the like, thereby to calculate the performance shift of the NOx storage catalyst, for example, the degree of time degradation. In this manner, by calculating the performance shift of the NOx storage catalyst, an appropriate timing of performing the reduction treatment and the injection amount of fuel can be calculated.

When the ammonia-concentration measuring unit 56 detects that ammonia is discharged from the NOx storage catalytic unit 26, the control unit 62 calculates an accumulated amount of discharged ammonia, and controls the timing of the reduction treatment so that nitrogen oxides corresponding to a discharge amount of ammonia are discharged from the NOx storage catalytic unit 26. Specifically, the control unit 62 delays the timing of the reduction treatment so that the reduction treatment is not performed for a certain time even if the threshold limit of the NOx storage catalytic unit 26 is exceeded. Accordingly, nitrogen oxides contained in flue gas are not stored in the NOx storage catalytic unit 26, but are supplied to the SCR catalytic unit 54, so that nitrogen oxides can react with ammonia trapped by the SCR catalytic unit 54, thereby enabling to remove ammonia. Accordingly, discharge of ammonia and nitrogen oxides from the flue gas purifying device can be further suppressed.

When the post-treatment nitrogen-oxide-concentration measuring unit 58 detects nitrogen oxides contained in flue gas, the control unit 62 causes the fuel injecting unit 22 to inject more fuel. It can be detected whether ammonia is trapped by the SCR catalytic unit 54 by detecting nitrogen oxides in flue gas by the post-treatment nitrogen-oxide-concentration measuring unit 58. When the post-treatment nitrogen-oxide-concentration measuring unit 58 detects that nitrogen oxides are contained in flue gas, the control unit 62 causes the fuel injecting unit 22 to inject more fuel, thereby bringing a state where the SCR catalytic unit 54 traps ammonia. In this manner, by achieving the state where the SCR catalytic unit 54 traps ammonia, even if the NOx storage catalytic unit 26 cannot trap nitrogen oxides, the SCR catalytic unit 54 can trap nitrogen oxides, and discharge of nitrogen oxides to outside from the flue gas purifying device 52 can be suppressed.

Furthermore, when the post-treatment ammonia-concentration measuring unit 60 detects that ammonia is contained in flue gas, the control unit 62 delays the timing of the reduction treatment for a certain time so that nitrogen oxides are discharged from the NOx storage catalytic unit 26. It can be determined whether the SCR catalytic unit 54 traps ammonia more than the limit by detecting ammonia by the post-treatment ammonia-concentration measuring unit 60. When the post-treatment ammonia-concentration measuring unit 60 detects that ammonia is contained in flue gas, the control unit 62 delays the timing of the reduction treatment to cause the NOx storage catalytic unit 26 to discharge a certain amount of nitrogen oxides. Accordingly, ammonia trapped in the SCR catalytic unit 54 can be reduced, thereby enabling to suppress discharge of ammonia from the SCR catalytic unit 54.

The SCR catalytic unit 54, the ammonia-concentration measuring unit 56, the post-treatment nitrogen-oxide-concentration measuring unit 58, and the post-treatment ammonia-concentration measuring unit 60 are provided in the vehicle 50 and the flue gas purifying device 52, because various effects can be achieved. However, certain effects can be achieved only by partly providing a configuration of these units. The post-treatment nitrogen-oxide-concentration measuring unit 58 and the post-treatment ammonia-concentration measuring unit 60 can achieve the effects described above when the SCR catalytic unit 54 is provided.

It is desired that the flue gas purifying device 52 is provided with a temperature detecting unit that detects the temperature of the NOx storage catalyst to control the timing of performing the reduction treatment and the injection amount of fuel also by using the temperature of the NOx storage catalyst detected by the temperature detecting unit. Because the performance of the NOx storage catalyst changes according to the temperature, the temperature is detected and the injection amount is calculated by using a temperature history thereof, thereby enabling to calculate the more appropriate injection amount, and achieve a requisite minimum injection amount. Accordingly, appropriate control can be performed, while suppressing discharge of ammonia and nitrogen oxides from the flue gas purifying device.

In the above embodiments, it has been explained that the flue gas purifying device includes the concentration measuring unit 28 that measures the concentration of nitrogen oxides. However, only the ammonia-concentration measuring unit 56 in FIG. 5 can be provided without providing the concentration measuring unit 28. In this manner, when only the ammonia-concentration measuring unit 56 is provided, an appropriate timing of the reduction treatment (that is, fuel injection) cannot be calculated. However, excessive injection of fuel can be suppressed and discharge of ammonia can be suppressed.

Any type of fuel such as methanol, propylene, kerosene, and light gas oil can be used as the fuel to be injected from the fuel injecting unit, so long as it is a liquid that can reduce nitrogen oxides. Further, it is not limited to the fuel, and any reducing agent that reduces nitrogen oxides can be used.

### Industrial Applicability

As described above, the flue gas purifying device according to the present invention is useful for purifying flue gas discharged from an internal combustion engine, and the flue gas purifying device is particularly suitable for purifying flue gas discharged from a diesel engine mounted on a vehicle.

### Reference Signs List

- 10, 50: vehicle
- 12: diesel engine
- 14: exhaust pipe
- 16, 52: flue gas purifying device
- 18: oxidation catalyst
- 22: fuel injecting unit
- 24: fuel tank
- 26: NOx storage catalytic unit
- 28: concentration measuring unit
- 30, 62: control unit
- 40: measuring unit body
- 42: optical fiber
- 44: measuring cell
- 46: light receiving unit
- 54: SCR catalytic unit
- 56: ammonia-concentration measuring unit
- 58: post-treatment nitrogen-oxide-concentration measuring unit
- 60: post-treatment ammonia-concentration measuring unit

## Claims

1. A flue gas purifying device that reduces nitrogen oxides contained in flue gas discharged from an internal combustion engine, the device comprising:
an exhaust pipe that guides flue gas discharged from the internal combustion engine;
a catalytic unit that is arranged on a downstream side to the internal combustion engine in a flow direction of the flue gas and includes a nitrogen-oxide storage-reduction catalyst that stores nitrogen oxides contained in the flue gas and a support mechanism that is arranged in the exhaust pipe and supports the nitrogen-oxide storage-reduction catalyst in the exhaust pipe;
a reducing-agent injecting unit that injects a reducing agent to the catalytic unit in the exhaust pipe;
a concentration measuring unit that is arranged on a downstream side to the catalytic unit in a flow direction of the flue gas and measures a concentration of nitrogen oxides in the flue gas having passed through the nitrogen-oxide storage-reduction catalyst; and
a control unit that controls whether to inject the reducing agent from the reducing-agent injecting unit based on a concentration of nitrogen oxides measured by the concentration measuring unit.

2. The flue gas purifying device according to claim 1, wherein the concentration measuring unit continuously measures a concentration of nitrogen monoxide as the concentration of nitrogen oxides.

3. The flue gas purifying device according to claim 1 or 2, further comprising a temperature detecting unit that detects a temperature of the nitrogen-oxide storage-reduction catalyst, wherein
the control unit stores temperature history data thereof detected by the temperature detecting unit, calculates an amount of fuel to be injected from the reducing-agent injecting unit based on the temperature history data and the concentration of nitrogen oxides, and causes the reducing-agent injecting unit to inject a calculated amount of fuel.

4. The flue gas purifying device according to any one of claims 1 to 3, wherein the control unit causes the reducing-agent injecting unit to inject the reducing agent when the concentration of nitrogen oxides measured by the concentration measuring unit exceeds a standard value.

5. The flue gas purifying device according to any one of claims 1 to 4, further comprising an ammonia-concentration measuring unit that is arranged on a downstream side to the catalytic unit in a flow direction of the flue gas and measures an ammonia concentration in the flue gas having passed through the nitrogen-oxide storage-reduction catalyst, and
the control unit controls an amount of a reducing agent to be injected based on the ammonia concentration measured by the ammonia-concentration measuring unit.

6. The flue gas purifying device according to claim 5, wherein the control unit calculates time degradation of a storage capacity of the nitrogen-oxide storage-reduction catalyst based on the detected concentration of nitrogen oxides and the detected ammonia concentration and controls an injection timing and an injection amount of a reducing agent based on a calculation result thereof.

7. The flue gas purifying device according to any one of claims 1 to 6, further comprising an SCR catalytic unit that is arranged on a downstream side to the catalytic unit in a flow direction of the flue gas, and includes an SCR catalyst that promotes a reaction between the nitrogen oxides and ammonia, and a support mechanism that is arranged in the exhaust pipe and supports the SCR catalyst in the exhaust pipe.

8. The flue gas purifying device according to claim 7, further comprising a post-treatment nitrogen-oxide-concentration measuring unit that is arranged on a downstream side to the SCR catalytic unit in a flow direction of the flue gas and measures a concentration of nitrogen oxides in flue gas having passed through the SCR catalyst, wherein
the control unit controls injection of a reducing agent by the reducing-agent injecting unit also based on concentration of nitrogen oxides measured by the post-treatment nitrogen-oxide-concentration measuring unit.

9. The flue gas purifying device according to claim 7 or 8, further comprising a post-treatment ammonia-concentration measuring unit that is arranged on a downstream side to the SCR catalytic unit in a flow direction of the flue gas and measures an ammonia concentration in flue gas having passed through the SCR catalyst, wherein
the control unit controls injection of a reducing agent by the reducing-agent injecting unit also based on an ammonia concentration measured by the post-treatment ammonia-concentration measuring unit.
